(19)

**Europäisches Patentamt**
**European Patent Office**
**Office européen des brevets**

(11) **EP 4 324 877 A1**

(12) **EUROPEAN PATENT APPLICATION**

(43) Date of publication:
**21.02.2024 Bulletin 2024/08**

(21) Application number: **23191024.1**

(22) Date of filing: **11.08.2023**

(51) International Patent Classification (IPC):
***C08L 23/04*** *(2006.01)*

(52) Cooperative Patent Classification (CPC):
(C-Sets available)
**C08L 23/04;** C08L 2205/025; C08L 2207/062

(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.08.2022 KR 20220104064**

(71) Applicants:
• **SK Innovation Co., Ltd.**
**Seoul 03188 (KR)**
• **SK Geo Centric Co., Ltd.**
**Jongno-gu**
**Seoul 03161 (KR)**

(72) Inventors:
• **LEE, Hye Jin**
**34124 Daejeon (KR)**
• **PARK, Jong Sang**
**34124 Daejeon (KR)**
• **HONG, Dae Sig**
**03188 Seoul (KR)**
• **KANG, Sang Mook**
**03188 Seoul (KR)**

(74) Representative: **Frick, Robert**
**Lorenz Seidler Gossel**
**Rechtsanwälte Patentanwälte**
**Partnerschaft mbB**
**Widenmayerstraße 23**
**80538 München (DE)**

(54) **POLYMER COMPOSITIONS INCLUDING HIGH-DENSITY POLYETHYLENE RECOVERED FROM SECONDARY BATTERY SEPARATORS AND THEIR USE TO MANUFACTURE CONTAINERS**

(57)    The invention relates to a polymer composition suitable, for example, for manufacturing a small to medium-sized container, the polymer composition including a high-density polyethylene recovered from a secondary battery separator.

EP 4 324 877 A1

**(Cont. next page)**

(52) Cooperative Patent Classification (CPC): (Cont.)

C-Sets
**C08L 23/04, C08L 23/04**

**Description**

**TECHNICAL FIELD**

The invention relates to a polymer composition for manufacturing a small to medium-sized container, the polymer composition including a high-density polyethylene recovered from a secondary battery separator, and to a small to medium-sized container manufactured from such a polymer composition.

**BACKGROUND**

As the use of a secondary battery becomes more and more abundant, the number of waste secondary batteries, which are discarded at the end of their lifespan, is increasing. Various methods for recycling such waste secondary batteries are hence being studied recently, including pre-processing work like recovering, discharging, crushing and sorting, thereby classifying different parts of the waste secondary batteries like outer cans, separators or electrodes. For metals such as cobalt, nickel, lithium and manganese, processes of recovery from these parts are available.

However, polymers of separators recovered from the waste secondary batteries or from defective products, or from separator scraps produced during a manufacturing process are presently not recycled, but incinerated or crushed and sometimes exported overseas, and have thus been identified as a cause of environmental pollution.

Various efforts to recycle polymers of waste separators have been attempted, but due to difficult physical properties and processability, it is necessary to perform adjustments to make the materials appropriate for use and further processing in molding methods.

More specifically, since separators are typically made from polyethylene, various products may, in principle, be molded using the polyethylene recovered from waste separators. These include small to medium-sized containers. These containers are required to have a high standard in mechanical properties such as crack resistance, tensile strength, and flexural modulus, and the polymer materials must be readily processabile for efficient workability. However, while polyethylene recovered from waste separators typically has excellent impact strength, it typically has a poor crack resistance and insignificant elongation and flexural modulus. It also typically has bad processability due to a low melt index, and thus, it is difficult to mold.

The problem to be solved by the present invention is the development of an environmentally friendly polymer composition, which includes a polyethylene recycled from a waste separator, has excellent processability so that it may be molded into products of various forms, and lead to products of excellent mechanical properties

**SUMMARY**

Against this background, the present invention is directed to a polymer composition for manufacturing a container, preferably a small to medium-sized container, the composition including a high-density polyethylene recovered from a secondary battery separator, the composition having excellent mechanical properties such as flexural modulus, tensile strength at yield, and elongation, and having excellent processability.

In this invention, a small to medium-sized container is preferably one having a capacity of less than 50 L, preferably less than 20 L.

In addition, the present invention is directed to a small to medium-sized container manufactured by molding such a polymer composition.

Further, the present invention is directed to a method of recycling a waste separator of a secondary battery to prepare such a polymer composition and to manufacture a small to medium-sized container having excellent mechanical properties by molding the polymer composition.

According to the invention, a polymer composition in agreement with claim 1 for manufacturing a small to medium-sized container is provided. The polymer composition includes a high-density polyethylene recovered from a secondary battery separator. It was found that when a new material satisfying certain conditions is included, a polymer composition having excellent mechanical properties such as processability, flexural modulus, tensile strength at yield, and elongation in manufacturing a small to medium-sized container may be prepared.

More specifically, a polymer composition according to the invention includes: a first high-density polyethylene; and a second high-density polyethylene having a density of 0.930 to 0.970 g/cm$^3$, wherein the polymer composition satisfies the following Equation 1:

$$[\text{Equation 1}] \quad -1 \; < \frac{x}{100} * \log(\text{MI}_a) + \frac{y}{100} * \log(\text{MI}_b) < 0$$

wherein

x is a weight percentage of the first high-density polyethylene in the polymer composition for manufacturing a small to medium-sized container, y is a weight percentage of the second high-density polyethylene in the polymer composition for manufacturing a small to medium-sized container,
$MI_a$ is a melt flow index of the first high-density polyethylene, is measured in accordance with ASTM D1238 (190°C, 2.16 kg); and $MI_b$ is a melt flow index of the second high-density polyethylene, as measured in accordance with ASTM D1238 (190°C, 2.16 kg).

In one embodiment, the first high-density polyethylene recovered from the secondary battery separator has a melt flow index of 0.01 to 0.20 g/10 min as measured in accordance with ASTM D1238 (190°C, 2.16 kg).
In one embodiment, the first high-density polyethylene recovered from the secondary battery separator has a flexural modulus of 5,000 to 15,000 kg/cm$^2$, a tensile strength at yield of 200 to 400 kg/cm$^2$, and an elongation of 300% or more, when measured by methods as described further down in the description.
In one embodiment, the polymer composition includes 20 to 60 wt% of the first high-density polyethylene and 40 to 80 wt% of the second high-density polyethylene.
In one embodiment, the polymer composition satisfies the following Equation 1-1:

$$[\text{Equation 1-1}] \quad -0.7 \; < \frac{x}{100} * \log(\text{MI}_a) + \frac{y}{100} * \log(\text{MI}_b) < -0.3$$

In one embodiment, the melt flow indices of the first high-density polyethylene ($MI_a$) and the second high-density polyethylene ($MI_b$), when measured in accordance with ASTM D1238 (190°C, 2.16 kg), satisfy the following Equation 2.

$$[\text{Equation 2}] \quad 0.15 \leq \text{MI}_b - \text{MI}_a \leq 5$$

In one embodiment, the second high-density polyethylene has a melt flow index of 0.25 to 1.5 g/10 min, when measured in accordance with ASTM D1238 (190°C, 2.16 kg).
In one embodiment, the second high-density polyethylene has a polydispersity index (PDI, Mw/Mn) of 6 or more, when measured as described further down in the description.
In one embodiment, the second high-density polyethylene has a flexural modulus of 9,000 kg/cm$^2$ or more, when measured as described further down in the description.
In one embodiment, the polymer composition has a melt flow index of 0.1 to 0.5 g/10 min, when measured in accordance with ASTM D1238 (190°C, 2.16 kg).
In one embodiment, the polymer composition has a tensile strength at yield of 240 kg/cm$^2$ or more and an elongation of 300% or more, when measured by methods as described further down in the description.
In one embodiment, the polymer composition has an environmental stress crack resistance of 30 hours or more, when measured in accordance with ASTM D1693.
In one embodiment, the polymer composition has an Izod impact strength measured at a temperature of 23±2°C of 20 kgf.cm/cm or more and a flexural modulus of 10,000 kg/cm$^2$ or more, when measured by methods as described further down in the description.
The invention further relates to pellets for molding, the pellets including a polymer composition according to the invention.
Further, the invention relates to a container, preferably a small to medium-sized container, manufactured by molding the polymer composition according to the invention.
Yet further, the invention relates to a method of manufacturing a container, preferably a small to medium-sized container, the method including: (a) recovering a first high-density polyethylene from a secondary battery separator and selecting a second high-density polyethylene;

(b) preparing a pre-molded body from a polymer composition including the first high-density polyethylene and the second high-density polyethylene; and
(c) molding the pre-molded body to manufacture the container,

wherein the second high-density polyethylene has a density of 0.930 to 0.970 g/cm$^3$, and
the polymer composition satisfies Equation 1 as defined above.

In one embodiment, in step (a), the secondary battery separator is any one or two or more waste separators selected from the group of: waste separators obtained by removing inorganic coating layers from separators recovered from waste secondary batteries or secondary battery defective products; scraps produced in a secondary battery separator manufacturing process; or separator ends recovered after trimming.

In one embodiment, in step (c), the molding is performed by injection molding, blow molding, or extrusion molding.

Other preferred features and aspects of the invention are described in the following detailed description and the drawings.

**BRIEF DESCRIPTION OF THE DRAWINGS**

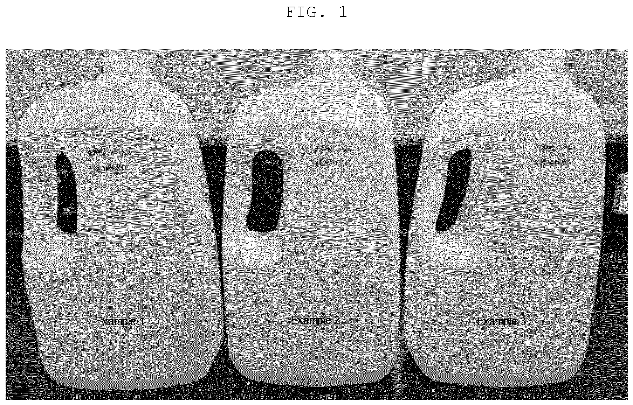

FIG. 1 is an image of small to medium-sized molded articles manufactured by blow molding polymer compositions of Examples 1 to 3.

**DETAILED DESCRIPTION OF EMBODIMENTS**

In the following, units used in the present specification without particular mention are based on weights, and as an example, a unit of % or ratio refers to a wt% or a weight ratio and wt% refers to wt% of any one component in a total composition, unless otherwise defined.

The term "small to medium-sized container" used in the present specification may include a small to medium-sized structure used in daily life such as a product container of less than 20 L, a daily necessities case, an airtight container and a plastic bottle/canister.

A polymer composition according to the invention, which can be used for manufacturing a small to medium-sized container, includes: a first high-density polyethylene, that has been recovered from a secondary battery separator; and a second high-density polyethylene having a density of 0.930 to 0.970 g/cm$^3$, wherein the polymer composition satisfies the following Equation 1. In a preferred embodiment, the polymer composition satisfies the following Equation 1-1:

$$[\text{Equation 1}] \quad -1 \; < \frac{x}{100} * \log(\text{MI}_a) + \frac{y}{100} * \log(\text{MI}_b) < 0$$

$$[\text{Equation 1-1}] \quad -0.7 \; < \frac{x}{100} * \log(\text{MI}_a) + \frac{y}{100} * \log(\text{MI}_b) < -0.3$$

In the equations, x is a weight percentage of the first high-density polyethylene in the polymer composition for manufacturing a small to medium-sized container, y is a weight percentage of the second high-density polyethylene in the polymer composition for manufacturing a small to medium-sized container, $\text{MI}_a$ is a melt flow index of the first high-density polyethylene, $\text{MI}_b$ is a melt flow index of the second high-density polyethylene, the melt flow indices being measured in accordance with ASTM D1238 (190°C, 2.16 kg).

The secondary battery separator may be any one or two or more waste separators selected from waste separators obtained by removing inorganic coating layers from separators recovered from waste lithium secondary batteries and secondary battery defective products, scraps produced in a secondary battery separator manufacturing process, separator ends recovered after trimming, and the like. When taken alone, the first high-density polyethylene recovered from the secondary battery separator described above (hereinafter, first high-density polyethylene) may have a bad processability due to a low melt index and has insignificant mechanical properties such as elongation and flexural modulus, so that it is difficult to recycle it, but the polymer composition for manufacturing a small to medium-sized according to an exemplary embodiment, though including the first high-density polyethylene, may implement excellent processability and excellent mechanical strength.

The first high-density polyethylene may have a weight average molecular weight (Mw) of 100,000 to 1,000,000 g/mol, specifically 150,000 to 700,000 g/mol, and more specifically 200,000 to 500,000 g/mol, when measured by a method as described further below. The number average molecular weight (Mn) of the first high-density polyethylene may range between 10,000 to 500,000 g/mol, specifically 20,000 to 400,000 g/mol, and more specifically 30,000 to 300,000 g/mol, when measured by a method as described further below. The polydispersity index (PDI) of the first high-density polyethylene may range between 2 to 30, specifically 3 to 25, and more specifically 4 to 20, when measured by a method as described further below.

The first high-density polyethylene may have a melt flow index of 0.001 to 0.5 g/10 min, specifically 0.01 to 0.20 g/10 min, and more specifically 0.01 to 0.10 g/10 min, when measured in accordance with ASTM D1238 (190°C, 2.16 kg).

The first high-density polyethylene may have a density of 0.920 to 0.990 g/cm$^3$, specifically 0.930 to 0.970 g/cm$^3$, and more specifically 0.940 to 0.960g/cm$^3$.

The first high-density polyethylene may have a melting point ($T_m$) of 100°C or higher, specifically 120°C or higher, and more specifically 130°C or higher, when determined by DSC according to ASTM D3418.

The first high-density polyethylene may have a tensile strength at yield of 150 to 450 kgf/cm$^2$, specifically 200 to 400 kgf/cm$^2$, and more specifically 220 to 350 kgf/cm$^2$, when determined as explained further below.

IThe first high-density polyethylene may have an elongation at break of 300% or more, specifically 350 to 2000%, and more specifically 400 to 1500%, when determined as explained further below.

The first high-density polyethylene may have a flexural modulus of 2,000 to 25,000 kg/cm$^2$, specifically 3,000 to 20,000 kg/cm$^2$, and more specifically 5,000 to 15,000 kg/cm$^2$, when determined as explained further below.

The first high-density polyethylene may have an Izod impact strength at room temperature (23±2°C) of 50 kgf.cm/cm or more, specifically 80 kgf.cm/cm or more, when determined as explained further below. Though the upper limit is not largely limited, the first high-density polyethylene may have an Izod impact strength of 200 kgf.cm/cm or less, when determined as explained further below.

The second high-density polyethylene may have a weight average molecular weight (Mw) of 50,000 to 500,000 g/mol, specifically 80,000 to 400,000 g/mol, and more specifically 100,000 to 300,000 g/mol, when determined as explained further below. The number average molecular weight (Mn) of the second high-density polyethylene may be from 10,000 to 250,000 g/mol, specifically 15,000 to 200,000 g/mol, and more specifically 20,000 to 150,000 g/mol,, when determined as explained further below.

The melt flow index of the first high-density polyethylene ($MI_a$) and the melt flow index of the second high-density polyethylene ($MI_b$) may satisfy the following Equation 2, specifically Equation 2-1, when measured in accordance with ASTM D1238 (190°C, 2.16 kg):

$$[\text{Equation 2}] \quad 0.15 \leq MI_b - MI_a \leq 5$$

$$[\text{Equation 2-1}] \quad 0.25 \leq MI_b - MI_a \leq 1.5$$

Such melt flow index is appropriate for manufacturing small to medium-sized containers, thereby implementing more improved work efficiency and a low defect rate.

In specific embodiments, the second high-density polyethylene, when measured in accordance with ASTM D1238 (190°C, 2.16 kg), may be 0.1 to 5 g/10 min, specifically 0.25 to 1.5 g/10 min, and more specifically 0.5 to 1 g/10 min.

In embodiments, the first high-density polyethylene and the second high-density polyethylene may satisfy both Equation 1 and Equation 2, specifically both Equation 1-1 and Equation 2-1. In this case, the polymer composition shows a melt flow index very preferably for manufacturing small to medium-sized containers, and furthermore, may effectively implement excellent mechanical properties such as elongation, flexural modulus, and impact strength in the container.

The second high-density polyethylene may have a density of 0.930 to 0.970 g/cm$^3$, specifically 0.940 to 0.970 g/cm$^3$, and more specifically 0.950 to 0.970 g/cm$^3$.

The second high-density polyethylene may have a polydispersity index (PDI, Mw/Mn) of 3 or more, specifically 4 or more, and more specifically 5 to 20, when measured as described further below.

The second high-density polyethylene may have a melting point ($T_m$) of 100°C or higher, specifically 120°C or higher, and more specifically 125 to 150°C, when determined by DSC according to ASTM D3418.

The second high-density polyethylene may have a tensile strength at yield of 100 to 500 kgf/cm$^2$, specifically 200 to 400 kgf/cm$^2$, and more specifically 250 to 350 kgf/cm$^2$, when determined as described further below.

The second high-density polyethylene may have an elongation at break of 300% or more, specifically 350 to 2000%, or 400 to 1500%, and more specifically 400 to 1000%, when determined as described further below.

The second high-density polyethylene may have an Izod impact strength at room temperature (23±2°C) of 1 kgf.cm/cm or more, specifically 5 kgf.cm/cm or more, when determined as described further below. Though the upper limit is not largely limited, second high-density polyethylene may have an Izod impact strength at room temperature (23±2°C) of 200 kgf.cm/cm or less, when determined as described further below.

The second high-density polyethylene may have a flexural modulus of 5000 to 50,000 kg/cm$^2$, specifically 7000 to 30,000 kg/cm$^2$, and more specifically 9000 to 15,000 kg/cm$^2$ or 9000 kg/cm$^2$ or more, when determined as described further below.

The second high-density polyethylene may have a melt flow index of 0.25 to 1.5 g/10 min, and/or a polydispersity index (PDI, Mw/Mn) of 6 or more, and/or a flexural modulus of 9,000 kg/cm$^2$ or more.

The second high-density polyethylene may have an environmental stress crack resistance (ESCR) of 10 hours or more, specifically 50 hours or more, when determined as described further below. The upper limit may not be particularly limited.

The polymer composition including the second high-density polyethylene satisfying the physical properties described above may have suppressed occurrence of fine powder or fume to implement excellent process stability, and though including a significant amount of the first high-density polyethylene recovered from the waste separator, may show a melt flow index appropriate for manufacturing a small to medium-sized container with high work efficiency, the container having excellent mechanical properties such as elongation and flexural modulus.

Conventionally, a polyethylene was used alone or in combination with other polyethylenes for recycling polyethylene recovered from the waste separator. In such configurations, when the polyethylene is included in excess, a high melt flow index and insignificant mechanical properties are problematic. In order to solve the problems, the present invention is based on the finding that when a new polyethylene material satisfying certain conditions is applied, mechanical properties and processability which are appropriate for a small to medium-sized container can be obtained.

In one embodiment, the polymer composition may include 20 to 60 wt% of the first high-density polyethylene and 40 to 80 wt% of the second high-density polyethylene, specifically 30 to 50 wt% of the first high-density polyethylene and 50 to 70 wt% of the second high-density polyethylene. When the range described above is satisfied, the polymer composition may show a melt flow index highly appropriate for manufacturing a small to medium-sized container with excellent work efficiency, low occurrence of fine powder or fume to implement excellent process stability, the container having improved mechanical physical properties. As the content of the first high-density polyethylene is increased, recycling efficiency is increased, and thus, environmental goals achieved more effectively.

The polymer composition, though including 30 wt% or more of the first high-density polyethylene, may show a melt flow index appropriate for manufacturing a small to medium-sized container to exhibit excellent work efficiency to produce a small to medium-sized container having excellent mechanical properties such as Izod impact strength, elongation, and flexural modulus. The composition including 30 wt% of more of the recycled high-density polyethylene renders the inventive composition effective in achieving environmental goals.

In one embodiment, the polymer composition has a density of 0.930 to 0.990 g/cm$^3$, specifically 0.940 to 0.980g/cm$^3$, and more specifically 0.945 to 0.970g/cm$^3$.

In one embodiment, the polymer composition has a melt flow index of 0.1 to 1.0 g/10 min, specifically 0.1 to 0.7 g/10 min, and more specifically 0.1 to 0.5 g/10 min, as measured in accordance with ASTM D1238 (190°C, 2.16 kg). When this range is satisfied, processability most appropriate for manufacturing a small to medium-sized container is imparted, leading to improved work efficiency and a low defective rate.

In one embodiment, the polymer composition has a tensile strength at yield of 180 kg/cm$^2$ or more, specifically 220 kg/cm$^2$ or more, and more specifically 250 kg/cm$^2$ or more or 260 kg/cm$^2$ or more, when measured as described further below. Though the upper limit is not particularly limited, the polymer composition may have a tensile strength at yield of 2000 kg/cm$^2$ or less, when measured as described further below.

In one embodiment, the polymer composition has an elongation at break of 300% or more, specifically 350% or more or 400% or more, more specifically 500% or more, when measured as described further below. Though the upper limit is not particularly limited, the polymer composition may have an elongation at break of 2000% or less, when measured as described further below.

In one embodiment, the polymer composition has an environmental stress crack resistance (ESCR) of 10 hours or more, specifically 30 hours or more, and more specifically 50 hours or more or 100 hours or more, when measured as described further below. The upper limit is not particularly limited. A longer environmental stress crack resistance is representative for excellent physical properties of the polymer composition.

In one embodiment, the polymer composition has a tensile strength at yield of 240 kg/cm$^2$ or more and an elongation of 300% or more, and/or an environmental stress crack resistance of 30 hours or more.

In one embodiment, the polymer composition has an Izod impact strength measured at a temperature of 23±2°C of 10 kgf.cm/cm or more, specifically 20 kgf.cm/cm or more, and more specifically 20 to 50 kgf.cm/cm, when measured as described further below.

In one embodiment, the polymer composition has a flexural modulus of 7,500/cm$^2$ or more, specifically 9,000/cm$^2$ or more, and more specifically 10,000/cm$^2$ or more, when measured as described further below. Though the upper limit is not particularly limited, the polymer composition may have a flexural modulus of 100,000/cm$^2$ or less, when measured as described further below.

In one embodiment, the polymer composition has an Izod impact strength measured at a temperature of 23±2°C of 20 kgf.cm/cm or more, and/or a flexural modulus of 10,000 kg/cm$^2$ or more.

In one embodiment, the polymer composition further includes an additive commonly used in the art, depending on the purpose and the use. For example, the polymer composition may further include an antioxidant, a UV absorber, a UV stabilizer, a lubricant, a pigment, a colorant, a filler, a plasticizer, a flow agent, an antistatic agent, a flame retardant, a slap agent, an antiblock agent, and the like, and the additive may be included at an appropriate content within a range which does not impair the targeted physical properties.

The UV absorber may be a benzotriazine-based or benzotriazole-based UV absorber, and further, may be mixed with a HALS-based UV stabilizer or primary and secondary antioxidants such as dibutylhydroxytoluene, nonylphenylphosphite, and dibutylmethylpheno.

As a non-limiting example, the benzotriazoles-based UV absorber may include 2-(2'-hydroxymethylphenyl)benzotriazole, 2-(2'-hydroxy-3',5'-bis(α,α-dimethylbenzylphenyl))benzotriazole, 2-(2'-hydroxy-3',5'-dibutylphenyl)benzotriazole, 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole, and the like, and the benzotriazine-based UV absorber may be, for example, bis-ethylhexyloxyphenolmethoxyphenyl triazine.

In addition, the lubricant serves to improve flowability during extrusion molding and suppress frictional heat, and may be a combination of one or more selected from hydrocarbon-based, carboxylic acid-based, alcohol-based, amide-based, ester-based compounds, and mixtures thereof.

A pellet for molding including the polymer composition as described above is further proposed by the invention. The pellets are pre-molded bodies cut into a substantially uniform size and may form a starting material before manufacturing a molded article. The pellets may be manufactured by extrusion and injection, for example.

A container, preferably a small to medium-sized container manufactured by molding the polymer composition as described above, is a further subject of the invention. The molding may be selected from injection molding, blow molding, or extrusion molding. The polymer composition may show a melt flow index appropriate for a small to medium-sized container molding to allow efficient work and may decrease a defective rate during operation.

The container may be a small to medium-sized container, or a molded article such as a low volume container, a container for storage or preservation, an airtight container, or a packaging container. The container may have excellent physical properties such as tensile strength at yield, elongation, flexural strength, impact strength, and ESCR. There is also a significant beneficial environmental impact as the container is manufactured by recycling the first high-density polyethylene from a secondary battery separator. The physical properties of the polymer material of the invention and of the product, for example container obtained from it by molding or the like melt-based methods, are identical or similar.

A method of manufacturing a container including using recycled polymer material from a waste separator of a secondary battery is another subject of the present invention.

The method of manufacturing a container includes: (a) recovering a first high-density polyethylene from a secondary battery separator and selecting a second high-density polyethylene;

(b) preparing a pre-molded body from a polymer composition including the first high-density polyethylene and the second high-density polyethylene; and

(c) molding the pre-molded body to manufacture the container,

wherein the second high-density polyethylene includes a second high-density polyethylene having a density of 0.930 to 0.970 g/cm$^3$, and

wherein the polymer composition satisfies the following Equation 1:

$$[\text{Equation 1}] \quad -1 \; < \frac{x}{100} * \log(\text{MI}_a) + \frac{y}{100} * \log(\text{MI}_b) < 0$$

wherein

x is a weight percentage of the first high-density polyethylene in the polymer composition, y is a weight percentage of the second high-density polyethylene in the polymer composition,
$\text{MI}_a$ is a melt flow index of the first high-density polyethylene, $\text{MI}_b$ is a melt flow index of the second high-density polyethylene, and the melt flow indices are measured in accordance with ASTM D1238 (190°C, 2.16 kg).

In one embodiment, in step (a), the secondary battery separator may be any one or two or more waste separators selected from the group of the following: waste separators obtained by removing inorganic coating layers from separators recovered from waste lithium secondary batteries or secondary battery defective products; scraps produced in a secondary battery separator manufacturing process; or separator ends recovered after trimming.

In one embodiment, step (a) may further include a chemical or physical pre-processing process for removing impurities from the first high-density polyethylene from the secondary battery separator.

In one embodiment, the second high-density polyethylene satisfies Equation 1, specifically Equation 1-1, or Equation 2, specifically Equation 2-1.

The container and the polymer composition for manufacturing it is environmentally friendly because it includes recycling a waste separator for a secondary battery. Although the first high-density polyethylene recovered from the secondary battery may by itself be difficult to mold and shows insignificant physical properties, according to the invention, the second high-density polyethylene selected based on certain conditions is included, thereby providing a composition suitable for manufacturing a small to medium-sized container and having excellent processability and mechanical properties.

In one embodiment, step (b) is a step of manufacturing a pre-molded body for molding the polymer composition in (c), and specifically, the pre-molded body may be manufactured in the form of a pellet for molding for extrusion or injection molding, or parison for blow molding.

In one embodiment, in step (c), the molding may be performed by injection molding, blow molding, or extrusion molding, more specifically blow molding. The polymer composition according to the invention, though including a high-density polyethylene recovered from a secondary battery separator and having inappropriate physical properties and processability for the applications envisioned herein, includes the second high-density polyethylene selected according to certain conditions, thereby achieving processability appropriate for the applications envisioned herein, in particular for manufacturing a small to medium-sized container having excellent mechanical properties.

Hereinafter, the present disclosure will additionally be described in more detail with reference to the Examples and Comparative Examples.

Physical properties of the following examples and comparative examples were measured by the following methods. These methods also form a basis for the definitions of parameters above.

[Method of evaluating physical properties]

1. Density [g/cm$^3$]: after a calibration curve of density values with height based on a standard specimen with known density was created in a linear density gradient tube using a vertical column, the specimen for measuring a density prepared above was floated in the column, a height at which the specimen stopped was recorded, which was compared with the calibration curve, and the density of the specimen was recorded.

2. Molecular weight (Mw, Mn) [g/mol]: GPC (Agilent, Infinity 1260) was used to measure a weight average molecular weight (Mw) and a number average molecular weight (Mn). A GPC column temperature was 160°C. A solvent used was trichlorobenzene, a standard was polystyrene, and analysis was performed at room temperature at a flow rate of 1 mL/min. In addition, a polydispersity index (PDI) value was calculated from Mw and Mn. Other specific conditions are as follows.

- Analysis instrument: three columns (model name: PLgel Olexis available from Agilent 7.5×300 mm, 13 um) and one guard column (model name: PLgel Olexis available from Agilent 7.5×300 mm, 13 um) were connected, a temperature of 160°C and a GPC flow rate of 1 mL/min were set, and a GPC system to which a refractive index detector is connected (model name: 1260 Infinity II High-Temperature GPC System available from Agilent) was used

- Preparation of sample: 2 to 5 mg of samples were dissolved using 1 ml of 1,2,4-trichlorobenzene of 200 ppm of BHT. At this time, the samples were prepared by stirring at 150°C for 4 hours using a preprocessor (Agilent PL-SP 260 VS Sample Preparation System), 200 μL of the produced solution was injected to GPC, and analysis was performed.

3. Melt flow index (MI) [g/10 min]: The melt flow index was measured in accordance with ASTM D1238, as grams eluted per 10 minutes (g/10 min) under the conditions of 190°C, 2.16 kg. In the case of a recycled secondary battery separator product having a measured value of 0.05 or less, the measurement was performed at 21.6 kg and then the value was calculated by dividing the value by 95 which is a flow rate ratio (FRR) factor.

4. Tensile strength at yield and elongation (at break) [kgf/cm$^2$, %]: measured in accordance with ASTM D638, Type IV, specifically, measured under the speed condition of 50 mm/min, after conditioning a specimen having a thickness of 2.0 mm under the temperature condition of 23°C and the humidity environment of 50% for 40 hours.

5. Izod impact strength [kgf.cm/cm]: in accordance with ASTM D256, a specimen was manufactured under the conditions of Dimension A (10.16±0.05 mm), was conditioned under the temperature condition of 23°C and the humidity environment of 50% for 40 hours, and then the Izod impact strength at room temperature was measured at a temperature of 23±2°C.

6. Flexural modulus [kg/cm$^2$]: a specimen was conditioned in the temperature condition of 23°C in a humidity environment of 50% for 40 hours, and the flexural strength was measured in accordance with the Procedure condition B (0.1 mm/mm/min) of ASTM D790.

7. Environmental stress crack resistance (ESCR) [hour]: measured in accordance with Condition B, F50 (bath temperature: 50°C) of ASTM D1693.

8. The value according to the following Calculation Formula 1 was calculated and is shown in the following Table 3.

[Calculation Formula 1]

$$\frac{x}{100} * \log(\mathrm{MI}_a) + \frac{y}{100} * \log(\mathrm{MI}_b)$$

[Preparation Example 1]

Scraps produced in the secondary battery separator manufacturing process using a high-density polyethylene as a raw material were crushed into a size of approx. 5 cm×5 cm. The scraps were the scrap part remaining after the separator trimming process. the crushed scraps were processed in an extruder at a processing temperature of 230°C to obtain pellets. The pellets were sufficiently dried to obtain first high-density polyethylene pellets. The physical properties of these first high-density polyethylene pellets were measured and are shown in the following Table 1.

[Examples 1 to 4, and Comparative Examples 1 and 2]

The polymer compositions prepared according to Table 2 were input to a twin screw extruder and melt extruded at a processing temperature of 230°C for a sufficient time to obtain recycled resin pellets The recycled resin pellets were sufficiently dried and then melt-mixed with a new resin material at a processing temperature of 220°C to manufacture pellets for molding. The pellets for molding were injected or extruded to prepare specimen appropriate for each physical property evaluation standard, and the physical properties were measured and are shown in the following Table 3.

[Table 1]

|  | Preparation Example 1 | A | B | C | D | E | F |
|---|---|---|---|---|---|---|---|
| MI | 0.02 | 0.6 | 1 | 0.8 | 0.35 | 0.05 | 6.5 |
| MIb-MIa | - | 0.58 | 0.98 | 0.78 | 0.33 | 0.03 | 6.48 |
| Density | 0.952 | 0.963 | 0.965 | 0.955 | 0.958 | 0.953 | 0.953 |
| PDI | 4.3 | 8.5 | 10 | 8.5 | 14 | 23 | 6.0 |
| Tensile strength at yield | 288 | 300 | 240 | 230 | 280 | 260 | 220 |
| Elongation | 787 | 1000 | 500 | 600 | >700 | 970 | >500 |
| IZod | >60 | 7 | 8 | <60 | 15 | 20 | 10 |
| Flexural modulus | 11000 | 12000 | 12000 | 9000 | 9500 | 9180 | 8500 |
| ESCR | 70 | - | 13 | >300 | >600 | >1000 | 10 |

- A (YUZEX 8300, SK Chemicals Co., Ltd.)
- B (YUZEX 7300, SK Chemicals Co., Ltd.)
- C (YUZEX 3301, SK Chemicals Co., Ltd.)
- D (YUZEX 2520, SK Chemicals Co., Ltd.)
- E (YUZEX 6100, SK Chemicals Co., Ltd.)
- F (YUZEX 7220, SK Chemicals Co., Ltd.)

[Table 2]

| (wt%) | Preparation Example 1 | A | B | C | D | E | F |
|---|---|---|---|---|---|---|---|
| Example 1 | 30 | 70 |  |  |  |  |  |
| Example 2 | 30 |  | 70 |  |  |  |  |
| Example 3 | 30 |  |  | 70 |  |  |  |
| Example 4 | 30 |  |  |  | 70 |  |  |

(continued)

| (wt%) | Preparation Example 1 | A | B | C | D | E | F |
|---|---|---|---|---|---|---|---|
| Comparativ e Example 1 | 30 | | | | | 70 | |
| Comparativ e Example 2 | 30 | | | | | | 70 |

[Table 3]

| | Example 1 | Example 2 | Example 3 | Example 4 | Compara tive Example 1 | Compara tive Example 2 |
|---|---|---|---|---|---|---|
| Calculation Formula 1 | -0.66 | -0.51 | -0.58 | -0.83 | -1.42 | 0.06 |
| MI | 0.11 | 0.15 | 0.13 | 0.1 | 0.04 | 1.07 |
| Density | 0.956 | 0.959 | 0.952 | 0.955 | 0.951 | 0.951 |
| Tensile strength at yield | 280 | 275 | 260 | 277 | 240 | 210 |
| Elongation (E3) | 600 | 500 | 400 | 500 | 500 | 250 |
| IZod | 30 | 25 | 25 | 20 | 35 | 18 |
| Flexural modulus (FM3) | 11400 | 11100 | 10000 | 10000 | 9625 | 8200 |
| ESCR | 65 | 30 | >100 | >100 | >1000 | 35 |

As apparent from Tables 2 and 3, it could be experimentally confirmed that the polymer compositions according to the inventive examples, though including 30 wt% or more the first high-density polyethylene recovered from the secondary battery separator, show a melt flow index (MI) in a range of 0.1 to 0.5 g/10 min that is considered suitable for the manufacture of, for example, a small to medium-sized container The physical properties measured confirm that the thus-manufactured molded articles show beneficial elongation and flexural modulus, which are significantly improved when compared with the first high-density polyethylene of Preparation Example 1 per se, as recovered from the secondary battery separator. The molded articles also exhibit excellent tensile strength at yield and impact strength. The invention hence provides means to effectively implement environmental friendliness by upcycling polymer materials from waste secondary battery separators.

The physical properties of the product, for example the container, and the physical properties of the polymer composition according to the invention are identical or similar to each other. Hence, the polymer compositions according to the invention may be used to produce, for example, small to medium-sized containers having excellent physical properties, thereby recycling and upcycling high-density polyethylene recovered from a secondary battery waste separator.

**Claims**

1. A polymer composition, comprising:

    a first high-density polyethylene; and
    a second high-density polyethylene having a density of 0.930 to 0.970 g/cm$^3$;
    wherein the polymer composition satisfies the following Equation 1:

$$[\text{Equation 1}] \quad -1 \; < \frac{x}{100} * \log(\text{MI}_a) + \frac{y}{100} * \log(\text{MI}_b) < 0$$

    wherein

x is a weight percentage of the first high-density polyethylene,
y is a weight percentage of the second high-density polyethylene,
$MI_a$ is a melt flow index of the first high-density polyethylene, as measured in accordance with ASTM D1238 (190°C, 2.16 kg); and
$MI_b$ is a melt flow index of the second high-density polyethylene, as measured in accordance with ASTM D1238 (190°C, 2.16 kg).

2. The polymer composition of claim 1, wherein the first high-density polyethylene has a melt flow index of 0.01 to 0.2 g/10 min, when measured in accordance with ASTM D1238 (190°C, 2.16 kg).

3. The polymer composition of any preceding claim, wherein the first high-density polyethylene has a flexural modulus of 5,000 to 15,000 $kg/cm^2$, when measured in accordance with the Procedure condition B (0.1 mm/mm/min) of ASTM D790 after the specimen was conditioned in the temperature condition of 23°C in a humidity environment of 50% for 40 hours, and a tensile strength at yield of 200 to 400 $kg/cm^2$ and an elongation at break of 300% or more, both when measured in accordance with ASTM D638, Type IV, under the speed condition of 50 mm/min, after conditioning a specimen having a thickness of 2.0 mm under the temperature condition of 23°C and the humidity environment of 50% for 40 hours.

4. The polymer composition of any preceding claim, wherein the polymer composition includes 20 to 60 wt% of the first high-density polyethylene and 40 to 80 wt% of the second high-density polyethylene.

5. The polymer composition of any preceding claim, wherein the polymer composition satisfies the following Equation 1-1:

$$[\text{Equation 1-1}] \quad -0.7 < \frac{x}{100} * \log(\text{MI}_a) + \frac{y}{100} * \log(\text{MI}_b) < -0.3$$

6. The polymer composition of any preceding claim, wherein the melt flow indices of the first high-density polyethylene ($MI_a$) and the second high-density polyethylene ($MI_b$), when measured in accordance with ASTM D1238 (190°C, 2.16 kg), satisfy the following Equation 2:

$$[\text{Equation 2}] \quad 0.15 \leq \text{MI}_b - \text{MI}_a \leq 5$$

7. The polymer composition of any preceding claim, wherein the second high-density polyethylene has the melt flow index of 0.25 to 1.5 g/10 min, when measured in accordance with ASTM D1238 (190°C, 2.16 kg), and/or a polydispersity index (PDI, Mw/Mn) of 6 or more, when measured by GPC as specified in the description, and/or a flexural modulus of 9,000 $kg/cm^2$ or more, when measured in accordance with the Procedure condition B (0.1 mm/mm/min) of ASTM D790 after the specimen was conditioned in the temperature condition of 23°C in a humidity environment of 50% for 40 hours.

8. The polymer composition of any preceding claim, wherein the polymer composition has a melt flow index of 0.1 to 0.5 g/10 min, when measured in accordance with ASTM D1238 (190°C, 2.16 kg).

9. The polymer composition of any preceding claim, wherein the polymer composition has a tensile strength at yield of 240 $kg/cm^2$ or more and an elongation of 300% or more, when measured in accordance with ASTM D638, Type IV, under the speed condition of 50 mm/min, after conditioning a specimen having a thickness of 2.0 mm under the temperature condition of 23°C and the humidity environment of 50% for 40 hours; and/or an environmental stress crack resistance of 30 hours or more as measured in accordance with ASTM D1693.

10. The polymer composition of any preceding claim, wherein the polymer composition has an Izod impact strength measured at a temperature of 23±2°C of 20 kgf.cm/cm or more, when measured in accordance with ASTM D256, the measured specimen being manufactured under the conditions of Dimension A (10.1610.05 mm), conditioned under the temperature condition of 23°C and the humidity environment of 50% for 40 hours, and/or a flexural modulus of 10,000 $kg/cm^2$ or more, when measured in accordance with the Procedure condition B (0.1 mm/mm/min) of ASTM D790 after the specimen was conditioned in the temperature condition of 23°C in a humidity environment of 50% for 40 hours.

**11.** A container manufactured by molding the polymer composition of any preceding claim.

**12.** Pellets for molding, the pellets including a polymer composition according to any one of claims 1 to 10.

**13.** A method of manufacturing a container, the method comprising:

(a) recovering a first high-density polyethylene from a secondary battery separator and selecting a second high-density polyethylene;
(b) preparing a pre-molded body from a polymer composition including the first high-density polyethylene and the second high-density polyethylene; and
(c) molding the pre-molded body to manufacture a container;

wherein the second high-density polyethylene includes a second high-density polyethylene having a density of 0.930 to 0.970 g/cm$^3$, and
the polymer composition satisfies the following Equation 1:

$$[\text{Equation 1}] \quad -1 \ < \frac{x}{100} * \log(\text{MI}_a) + \frac{y}{100} * \log(\text{MI}_b) < 0$$

wherein

x is a weight percentage of the first high-density polyethylene,
y is a weight percentage of the second high-density polyethylene,
$\text{MI}_a$ is a melt flow index of the first high-density polyethylene, as measured in accordance with ASTM D1238 (190°C, 2.16 kg), and $\text{MI}_b$ is a melt flow index of the second high-density polyethylene, as measured in accordance with ASTM D1238 (190°C, 2.16 kg).

**14.** The method of claim 13, wherein in (a), the secondary battery separator is any one or two or more waste separators selected from the group consisting of: waste separators obtained by removing inorganic coating layers from separators recovered from waste secondary batteries or secondary battery defective products; scraps produced in a secondary battery separator manufacturing process; or separator ends recovered after trimming.

**15.** The method of claim 13 or 14, wherein in (c), the molding is performed by injection molding, blow molding or profile extrusion.

FIG. 1

Europäisches
Patentamt

European
Patent Office

Office européen
des brevets

# EUROPEAN SEARCH REPORT

**Application Number**

EP 23 19 1024

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/103116 A1 (KANG CHANG GEE [KR]) 19 May 2022 (2022-05-19) | 1-4,6-12 | INV. C08L23/04 |
| A | * examples 1-4; tables 1,2 * * paragraphs [0001], [0074] * | 5,13-15 | |
| E | & EP 4 245 496 A1 (KANG CHANG GEE [KR]) 20 September 2023 (2023-09-20) * examples 1-4; tables 1,2 * * paragraphs [0001], [0074] * | 1-3,6-9, 12 | |
| X | WO 2021/233818 A1 (BOREALIS AG [AT]) 25 November 2021 (2021-11-25) | 1,2,4, 6-8,11, 12 | |
| A | * examples IE1,IE2; tables 1-3 * * page 1, paragraphs 1,5 * * claim 1 * | 3,5,9, 10,13-15 | |
| X | EP 0 561 187 A1 (OWENS ILLINOIS PLASTIC PROD [US]) 22 September 1993 (1993-09-22) | 1,4,6-8, 11,12 | |
| A | * examples 1,10; tables I,II * * page 2, paragraph 1 * * page 3, line 28 - line 30 * * claim 2 * | 2,3,5,9, 10,13-15 | |

**TECHNICAL FIELDS SEARCHED (IPC)**

C08L

The present search report has been drawn up for all claims

| Place of search | Date of completion of the search | Examiner |
|---|---|---|
| Munich | 8 December 2023 | van Bergen, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 1024

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2023

| Patent document cited in search report | | | Publication date | Patent family member(s) | | | Publication date |
|---|---|---|---|---|---|---|---|
| WO 2022103116 | A1 | | 19-05-2022 | CN | 116368678 | A | 30-06-2023 |
| | | | | EP | 4245496 | A1 | 20-09-2023 |
| | | | | JP | 2023547283 | A | 09-11-2023 |
| | | | | KR | 102323858 | B1 | 10-11-2021 |
| | | | | WO | 2022103116 | A1 | 19-05-2022 |
| WO 2021233818 | A1 | | 25-11-2021 | CN | 115698165 | A | 03-02-2023 |
| | | | | EP | 4153673 | A1 | 29-03-2023 |
| | | | | US | 2023242744 | A1 | 03-08-2023 |
| | | | | WO | 2021233818 | A1 | 25-11-2021 |
| EP 0561187 | A1 | | 22-09-1993 | AT | E175146 | T1 | 15-01-1999 |
| | | | | CA | 2090596 | A1 | 28-08-1993 |
| | | | | EP | 0561187 | A1 | 22-09-1993 |
| | | | | JP | 3228814 | B2 | 12-11-2001 |
| | | | | JP | H0623863 | A | 01-02-1994 |
| | | | | US | 5534317 | A | 09-07-1996 |
| | | | | US | 5783637 | A | 21-07-1998 |

EPO FORM P0459

For more details about this annex : see Official Journal of the European Patent Office, No. 12/82